(19) Europäisches Patentamt
European Patent Office
Office européen des brevets

(11) **EP 4 633 023 A1**

(12) **EUROPEAN PATENT APPLICATION**
published in accordance with Art. 153(4) EPC

(43) Date of publication:
**15.10.2025 Bulletin 2025/42**

(21) Application number: **23900381.7**

(22) Date of filing: **09.11.2023**

(51) International Patent Classification (IPC):
**H02M 3/155** *(2006.01)*

(52) Cooperative Patent Classification (CPC):
**H02M 3/155**

(86) International application number:
**PCT/JP2023/040372**

(87) International publication number:
**WO 2024/122260 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.12.2022 JP 2022195216**

(71) Applicant: **DENSO CORPORATION
Kariya-city, Aichi 448-8661 (JP)**

(72) Inventors:
• **TOMITA, Kenji
Nisshin-city, Aichi 470-0111 (JP)**
• **SHIMIZU, Takahiro
Kariya-city Aichi 448-8661 (JP)**
• **UEDA, Yusuke
Kariya-city Aichi 448-8661 (JP)**

(74) Representative: **TBK
Bavariaring 4-6
80336 München (DE)**

(54) **CONTROL DEVICE FOR DC-DC CONVERTER, AND PROGRAM**

(57)     A control device (50) for a DC-to-DC converter (10, 100) includes: an electric current calculation unit (60) configured to calculate, based on electric current detection values of an electric current detection unit (42) that detects electric current flowing a reactor (30), an average electric current that is a time average value of the electric current flowing through the reactor in one switching cycle; a duty ratio calculation unit (61, 62) configured to calculate, based on a command value of the average electric current, a duty ratio in a discontinuous current mode; and a switch control unit (52, 63) configured to perform, based on the calculated duty ratio, switching control of a switch (31). Moreover, the duty ratio calculation unit is configured to: calculate, based on the duty ratio and the average electric current calculated in a plurality of past switching cycles, relationship information $(\alpha, \beta)$ between the average electric current and the duty ratio; and calculate, based on the calculated relationship information and the command value, the duty ratio in a next switching cycle.

FIG.1

**Description**

[CROSS-REFERENCE TO RELATED APPLICATIONS]

The present application is based on Japanese Patent Application No. 2022-195216 filed on December 6, 2022, the contents of which are incorporated by reference into the present application.

[TECHNICAL FIELD]

The present disclosure relates to control devices and programs for DC-to-DC converters.

[BACKGROUND ART]

Conventionally, DC-to-DC converters have been known which include a switch and a reactor. Moreover, control devices for the DC-to-DC converters have also been known, as disclosed in Patent Document 1. The control devices are configured to calculate the duty ratio in a discontinuous current mode in a next switching cycle based on an electric current detection value of an electric current detection unit, which detects electric current flowing through the reactor, and an estimated value of the inductance of the reactor.

Moreover, in consideration of the fact that an error may occur between the estimated value of the inductance of the reactor, which is used in the calculation of the duty ratio, and the actual value of the inductance of the reactor, the control devices are further configured to calculate a correction value for the duty ratio. Consequently, it becomes possible to suppress the influence of such an error on the calculation accuracy of the duty ratio.

[PRIOR ART LITERATURE]

[PATENT LITERATURE]

[Patent Document 1]: Japanese Patent Application Publication No. JP 2015-19448 A

[SUMMARY OF THE INVENTION]

An error may occur between the electric current detection value of the electric current detection unit and the actual value of the electric current flowing through the reactor. Due to the error in the electric current detection, the duty ratio used in switching control of the switch may deviate from a proper value.

A primary object of the present disclosure is to provide a control device and a program for a DC-to-DC converter, which enable improvement in the calculation accuracy of a duty ratio used in switching control of a switch of the DC-to-DC converter.

According to the present disclosure, there is provided a control device for a DC-to-DC converter. The DC-to-DC converter includes a switch and a reactor and is configured to transform an input voltage, by repeating accumulation of magnetic energy in the reactor and release of the magnetic energy from the reactor through switching control of the switch, and output the transformed voltage. The control device includes: an electric current calculation unit configured to calculate, based on electric current detection values of an electric current detection unit that detects electric current flowing through the reactor, an average electric current that is a time average value of the electric current flowing through the reactor in one switching cycle; a duty ratio calculation unit configured to calculate, based on a command value of the average electric current, a duty ratio in a discontinuous current mode; and a switch control unit configured to perform, based on the calculated duty ratio, the switching control of the switch. Moreover, the duty ratio calculation unit is configured to: calculate, based on the duty ratio and the average electric current calculated in a plurality of past switching cycles, relationship information between the average electric current and the duty ratio; and calculate, based on the calculated relationship information and the command value, the duty ratio in a next switching cycle.

With the duty ratio and the average electric current calculated in a plurality of past switching cycles, it is possible to determine the relationship between the average electric current, which may include an electric current detection error, and the duty ratio. In view of the above, the control device according to the present disclosure includes the duty ratio calculation unit described above. Consequently, it becomes possible to improve the calculation accuracy of the duty ratio in the discontinuous current mode even when the electric current detection values of the electric current detection unit include electric current detection errors.

[BRIEF DESCRIPTION OF THE DRAWINGS]

The above-described object, other objects, features and beneficial advantages according to the present disclosure will become more apparent from the following detailed explanation with reference to the accompanying drawings. In the drawings:

FIG. 1 is a diagram illustrating the overall configuration of a control system which includes a DC-to-DC converter according to a first embodiment;
FIG. 2 is a time chart illustrating the manner of switching and the change with time of reactor current in a discontinuous current mode;
FIG. 3 is a time chart illustrating the manner of switching and the change with time of the reactor current in a critical current mode;
FIG. 4 is a time chart illustrating the manner of switching and the change with time of the reactor current in a continuous current mode;
FIG. 5 is a graph illustrating the relationship between the average reactor current, the duty ratio and the like;
FIG. 6 is a block diagram illustrating a process performed by a control device in the discontinuous current mode;
FIG. 7 is a flowchart illustrating the process for controlling the DC-to-DC converter;
FIG. 8 is a diagram illustrating advantageous effects of the first embodiment;
FIG. 9 is another diagram illustrating the advantageous effects of the first embodiment;
FIG. 10 is another diagram illustrating the advantageous effects of the first embodiment;
FIG. 11 is another diagram illustrating the advantageous effects of the first embodiment;
FIG. 12 is a flowchart illustrating a process for controlling a DC-to-DC converter according to a second embodiment;
FIG. 13 is a flowchart illustrating a process for controlling a DC-to-DC converter according to a third embodiment; and
FIG. 14 is a diagram illustrating the overall configuration of a control system according to another embodiment.

[EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds and higher digits as appropriate. Moreover, it also should be noted that for corresponding and/or associated parts in one embodiment, reference may be made to the explanation thereof in the other embodiments.

[First Embodiment]

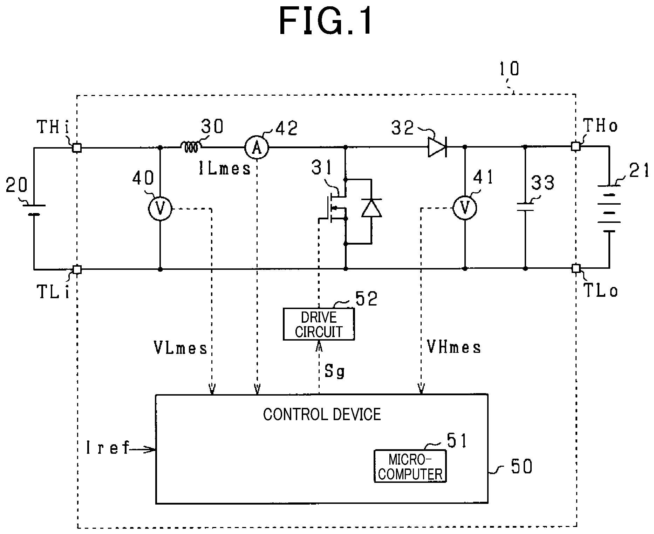

Hereinafter, a first embodiment embodying a control device according to the present disclosure will be described with reference to the drawings.
As shown in FIG. 1, a DC-to-DC converter 10 according to the present embodiment is configured as a non-isolated boost converter which steps up a voltage inputted through a higher-potential-side input terminal THi and a lower-potential-side input terminal TLi and outputs the stepped-up voltage through a higher-potential-side output terminal THo and a lower-potential-side output terminal TLo. The DC-to-DC converter 10 includes a reactor 30, a switch 31, a diode 32 and a capacitor 33. In the present embodiment, the switch 31 is implemented by an N-channel MOSFET. It should be noted that the switch 31 is not limited to an N-channel MOSFET, but may alternatively be implemented by, for example, an IGBT having a freewheeling diode connected in antiparallel thereto.
A first end of the reactor 30 is connected with a positive terminal of a DC power source 20 via the higher-potential-side input terminal THi. On the other hand, a second end of the reactor 30 is connected with both a drain of the switch 31 and an anode of the diode 32. Moreover, a source of the switch 31 is connected with a negative terminal of the DC power source 20 via the lower-potential-side input terminal TLi. In addition, the DC power source 20 may be implemented by, for example, a storage battery or a fuel cell stack.
A cathode of the diode 32 is connected with both a first end of the capacitor 33 and the higher-potential-side output terminal THo. On the other hand, a second end of the capacitor 33 is connected with the source of the switch 31, the lower-potential-side input terminal TLi and the lower-potential-side output terminal TLo. Moreover, the higher-potential-side output terminal THo is also connected with a positive terminal of a storage battery 21. Further, a negative terminal of the storage battery 21 is connected with the lower-potential-side output terminal TLo. In addition, the storage battery 21 may be implemented by a rechargeable secondary battery, such as a lithium-ion storage battery or a nickel-metal hydride storage battery.
The DC-to-DC converter 10 also includes an input voltage sensor 40 that serves as an input voltage detection unit, an output voltage sensor 41 that serves as an output voltage detection unit, and an electric current sensor 42 that serves as an electric current detection unit. The input voltage sensor 40 detects an input voltage of the DC-to-DC converter 10, while the output voltage sensor 41 detects an output voltage of the DC-to-DC converter 10. The electric current sensor 42 detects electric current flowing through the reactor 30. The detection values of the sensors 40 to 42 are inputted to a control device 50 that is provided in the DC-to-DC converter 10.

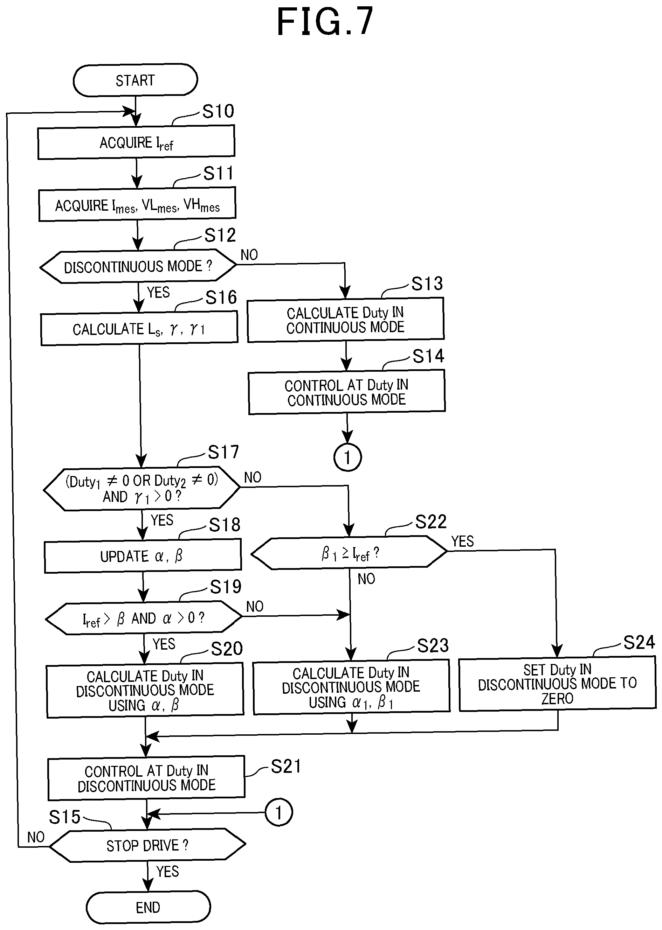

The control device 50 is mainly composed of a microcomputer 51 which includes a CPU. The functions of the microcomputer 51 may be provided by software recorded in a tangible memory device and a computer that executes it, only software, only hardware, or a combination thereof. For example, in the case of the microcomputer 51 being configured with an electronic circuit that is hardware, it may be configured with a digital circuit that includes a number of logic circuits, or with an analog circuit. For example, the microcomputer 51 may execute programs stored in a non-transitory tangible storage medium that is provided in the microcomputer 51 as a storage unit. The programs may include, for example, a program for performing a process shown in FIG. 7 which will be described later. Moreover, methods corresponding to the programs may be carried out by executing the programs. The storage unit may be, for example, a nonvolatile memory. In addition, the programs stored in the storage unit may be updated, for example by OTA (Over-The-Air), via a communication network such as the Internet.

The control device 50 selects a control mode from a discontinuous current mode and a continuous current mode and performs switching control of the switch 31 in the selected control mode.

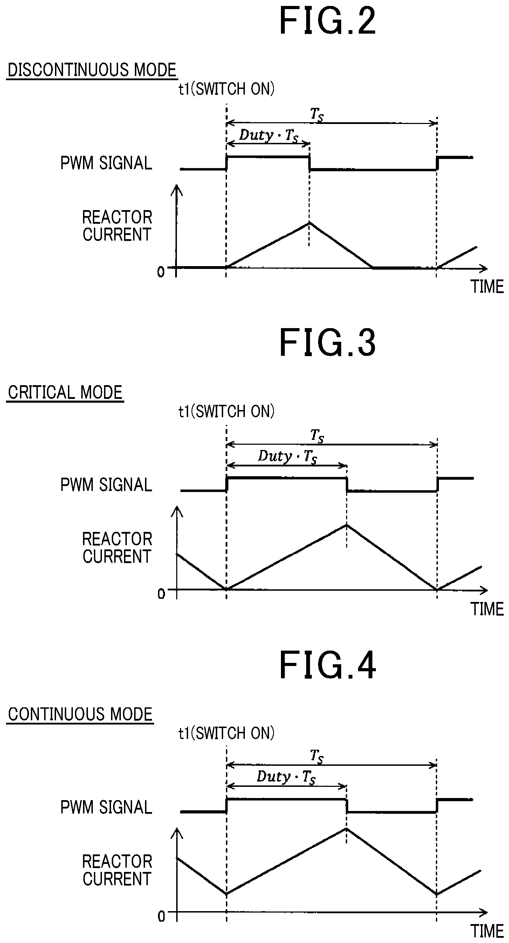

As shown in FIG. 2, the discontinuous current mode is a control mode in which a period during which the electric current flowing through the reactor 30 becomes zero occurs in one switching cycle Ts of the switch 31. The control device 50 calculates the duty ratio Duty in the discontinuous current mode, and performs switching control of the switch 31 based on the calculated duty ratio Duty. The duty ratio Duty is a value that determines the percentage of the ON duration Ton of the switch 31 in one switching cycle Ts (i.e., Ton/Ts = Duty). That is, in one switching cycle Ts, the control device 50 turns on the switch 31 during a period of (Duty×Ts) and turns off the switch 31 during a period of ((1-Duty)×Ts). During the ON duration of the switch 31, the electric current flowing through the reactor 30 gradually increases and magnetic energy is accumulated in the reactor 30. In contrast, during the OFF duration of the switch 31, the magnetic energy accumulated in the reactor 30 is released and the electric current flowing through the reactor 30 decreases to zero. Consequently, in one switching cycle Ts, the electric current flowing through the reactor 30, which changes with time, ideally has a triangular waveform first and is then kept at zero.

As shown in FIG. 4, the continuous current mode is a control mode in which electric current keeps flowing from the first end to the second end of the reactor 30 in one switching cycle Ts of the switch 31. The control device 50 calculates the duty ratio Duty in the continuous current mode, and performs switching control of the switch 31 based on the calculated duty ratio Duty. In addition, the duty ratio Duty in the continuous current mode may be calculated, for example, by the following equation (eq1).

$$\text{Duty} = 1 - \frac{VL_{mes}}{VH_{mes}} + K_p(I_{ref} - I_{mes}) \quad \cdots (eq1)$$

In the above equation (eq1), VLmes is an input voltage detection value detected by the input voltage sensor 40 in the current switching cycle, VHmes is an output voltage detection value detected by the output voltage sensor 41 in the current switching cycle, and Kp is the proportional gain of the feedback term. Moreover, Iref represents a command value of the average electric current of the reactor 30. The average electric current is a time average value of the electric current flowing through the reactor 30 in one switching cycle Ts. The command value Iref inputted to the control device 50 may be updated, for example, every switching cycle Ts. On the other hand, Imes represents the average electric current of the reactor 30 (hereinafter, to be referred to as the average electric current detection value) which is calculated based on the values of the electric current flowing through the reactor 30 and detected by the electric current sensor 42 (hereinafter, to be referred to as the electric current detection values ILmes). It should be noted that the feedback term on the right-hand side in the above equation (eq1) is not essential.

The boundary mode between the discontinuous current mode and the continuous current mode is a critical current mode as shown in FIG. 3. The critical current mode is a control mode in which the switch 31 is turned on at the timing when the electric current flowing through the reactor 30 decreases to zero.

The electric current detection values ILmes are used to calculate the duty ratio Duty in the discontinuous current mode. The electric current detection values ILmes include electric current detection errors. Therefore, the control device 50 calculates the duty ratio Duty in the discontinuous current mode in such a manner as to suppress the influence of the electric current detection errors on the control of the DC-to-DC converter 10. Hereinafter, explanation will be given of a method of calculating the duty ratio Duty in the discontinuous current mode.

The basic calculation formula for the duty ratio Duty in the discontinuous current mode can be expressed as the following equation (eq2). In the following equation (eq2), Ls represents the inductance of the reactor 30, and fsw represents the switching frequency (equal to 1/Ts) of the switch 31.

$$Duty = \sqrt{2L_s \cdot f_{sw} \cdot \frac{VH_{mes} - VL_{mes}}{VH_{mes} \cdot VL_{mes}} \cdot I_{ref}} \quad \cdot \cdot \cdot (eq2)$$

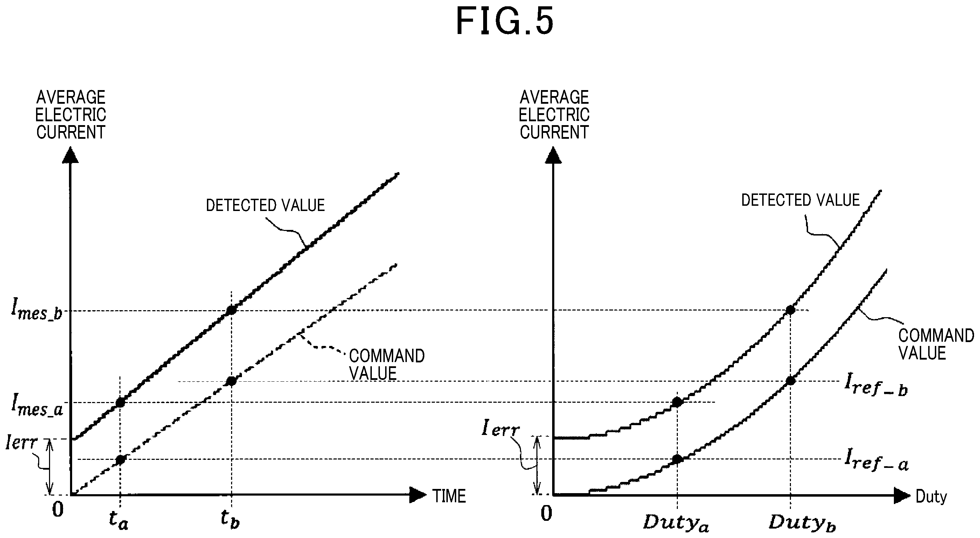

Further, the following equation (eq3) can be derived by solving the above equation (eq2) for the electric current and taking into account the existence of the electric current detection errors. In the following equation (eq3), Ierr is the offset electric current error between the average electric current detection value Imes and the command value Iref when the duty ratio Duty is zero, as shown by the relationship between the average electric current and the duty ratio Duty in FIG. 5.

$$I_{mes} = \frac{1}{2L_{sre} \cdot f_{sw}} \cdot \frac{VH_{re} \cdot VL_{re}}{VH_{re} - VL_{re}} \cdot Duty^2 + I_{err} \quad \cdot \cdot \cdot (eq3)$$

On the right-hand side of the above equation (eq3), the coefficients by which the duty ratio Duty is multiplied include VHre, VLre and Lsre. VHre represents the actual output voltage, VLre represents the actual input voltage, and Lsre represents the actual value of the inductance of the reactor 30.

FIG. 5 illustrates the relationship between the command value Iref and the average electric current detection value when the command value Iref is gradually increased at a constant rate. In the example shown in FIG. 5, the rate of increase of the command value Iref and the rate of increase of the average electric current detection value are different from each other. Specifically, the rate of increase of the average electric current detection value is higher than the rate of increase of the command value Iref. This is because the electric current detection values ILmes used in the calculation of the average electric current detection value include a gain error.

The above equation (eq3) can be expressed as the following equation (eq4). The following equation (eq4) represents the relationship information between the duty ratio Duty that is an independent variable and the average electric current detection value Imes that is a dependent variable. In the following equation (eq4), α, which represents coefficient information of the independent variable, is a correction coefficient; and β, which represents intercept information, is an offset correction value.

$$I_{mes} = \alpha \cdot Duty^2 + \beta \quad \cdot \cdot \cdot (eq4)$$

As shown in FIG. 5, the following equation (eq5) can be derived from the above equation (eq4) and the relationship between the average electric current detection value Imes_a and the duty ratio Dutya in a first cycle and the average electric current detection value Imes_b and the duty ratio Dutyb in a second cycle. Here, the first cycle is a switching cycle and the second cycle is a switching cycle different from the first cycle. It should be noted that in FIG. 5, the command value corresponding to the duty ratio Dutya is designated by Iref_a and the command value corresponding to the duty ratio Dutyb is designated by Iref_b.

$$\begin{pmatrix} I_{mes\_a} \\ I_{mes\_b} \end{pmatrix} = \begin{pmatrix} Duty_a^2 & 1 \\ Duty_b^2 & 1 \end{pmatrix} \begin{pmatrix} \alpha \\ \beta \end{pmatrix} \quad \cdot \cdot \cdot (eq5)$$

Further, the following equation (eq6) can be derived by solving the above equation (eq5) for the correction coefficient α and the offset correction value β.

$$\begin{pmatrix} \alpha \\ \beta \end{pmatrix} = \frac{1}{Duty_a^2 - Duty_b^2} \begin{pmatrix} I_{mes\_a} - I_{mes\_b} \\ -I_{mes\_a} \cdot Duty_b^2 + I_{mes\_b} \cdot Duty_a^2 \end{pmatrix} \quad \cdot \cdot \cdot (eq6)$$

That is, the correction coefficient α and the offset correction value β can be calculated based on the average electric current detection value and the duty ratio in the first and second cycles that are two different switching cycles.

In the present embodiment, the control device 50 calculates the correction coefficient α and the offset correction value β by the above equation (eq6) based on the average electric current detection value Imes1 and the duty ratio Duty1 both of which are calculated in the switching cycle immediately before the current switching cycle (to be referred to as the immediately-previous switching cycle hereinafter and corresponding to the "first cycle") and the average electric current detection value Imes2 and the duty ratio Duty2 both which are calculated in the switching cycle that comes two cycles before the current switching cycle (to be referred to as the second-previous switching cycle hereinafter and corresponding to the "second cycle"). In addition, the average electric current detection value Imes1 is calculated based on a plurality of electric current detection values ILmes detected in the immediately-previous switching cycle; and the average electric current detection value Imes2 is calculated based on a plurality of electric current detection values ILmes detected in the second-previous switching cycle.

As shown in the above equation (eq3), the correction coefficient $\alpha$ depends on the output voltage VHre, the input voltage VLre and the inductance Lsre of the reactor 30. If the voltages VHre and VLre and the inductance Lsre change from the immediately-previous switching cycle to the current switching cycle, the calculation accuracy of the correction coefficient $\alpha$ may decrease. Moreover, the inductance Lsre may change depending on the electric current flowing through the reactor 30.

**In** order to suppress the influence of changes in the voltages VHre and VLre and the inductance Lsre on the calculation accuracy of the correction coefficient $\alpha$, a correction parameter $\gamma$ in the current switching cycle is calculated by the following equation (eq7); and a correction parameter $\gamma1$ in the immediately-previous switching cycle is calculated by the following equation (eq8). A correction coefficient represented by $\gamma/\gamma1$ is a parameter for suppressing the influence of changes in the voltages VHre and VLre and the inductance Lsre on the calculation accuracy of the correction coefficient $\alpha$. The duty ratio Duty in the discontinuous current mode can be calculated by the following equation (eq9) based on the correction coefficient $\alpha$, the offset correction value $\beta$ and the correction coefficient $\gamma/\gamma1$.

**In** the following equation (eq7), VHmes is the output voltage detection value in the current switching cycle, VLmes is the input voltage detection value in the current switching cycle, and Ls is the estimated inductance value of the reactor 30 in the current switching cycle. **In** the following equation (eq8), VHmes1 is the output voltage detection value in the immediately-previous switching cycle, VLmes1 is the input voltage detection value in the immediately-previous switching cycle, and Ls1 is the estimated inductance value of the reactor 30 in the immediately-previous switching cycle.

$$\gamma = \frac{VH_{mes} \cdot VL_{mes}}{2L_s(VH_{mes} - VL_{mes})} \quad \cdot \cdot \cdot (eq7)$$

$$\gamma_1 = \frac{VH_{mes1} \cdot VL_{mes1}}{2L_{s1}(VH_{mes1} - VL_{mes1})} \quad \cdot \cdot \cdot (eq8)$$

$$\text{Duty} = \sqrt{\frac{\gamma}{\gamma_1} \cdot \frac{I_{ref} - \beta}{\alpha}} \quad \cdot \cdot \cdot (eq9)$$

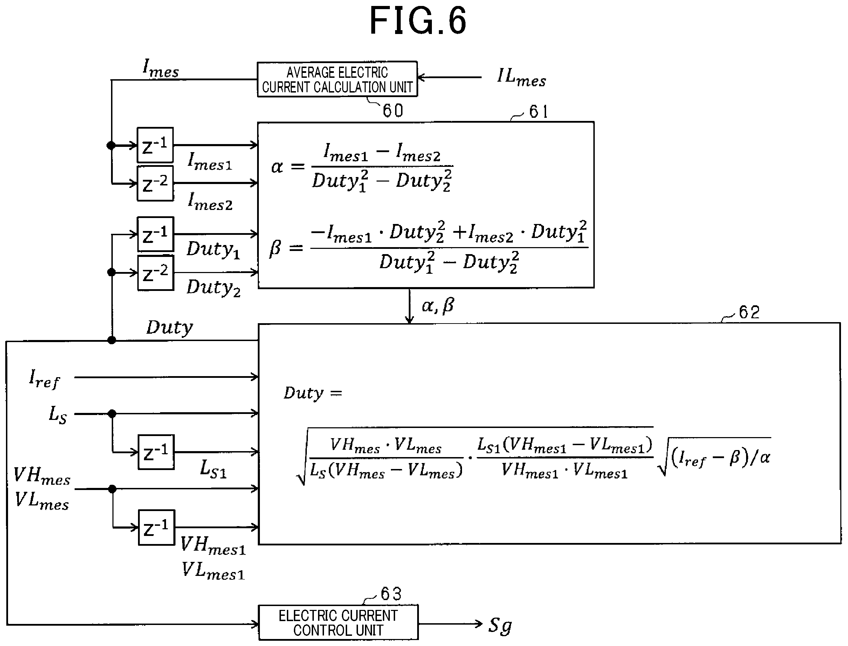

FIG. 6 is a block diagram illustrating the control performed by the control device 50 in the discontinuous current mode.

**In** the control device 50, an average electric current calculation unit 60 calculates the average electric current detection value Imes in the current switching cycle Ts based on the electric current detection values ILmes. The electric current flowing through the reactor 30 is sampled by the electric current sensor 42 a plurality of times (e.g., a dozen or so times) in one switching cycle Ts. The average electric current detection value Imes is calculated for each switching cycle and stored in a storage unit (or memory) provided in the control device 50.

A correction value calculation unit 61 calculates the correction coefficient $\alpha$ and the offset correction value $\beta$ by the above equation (eq6) based on the average electric current detection value Imes1 and the duty ratio Duty1 both of which are calculated in the immediately-previous switching cycle and the average electric current detection value Imes2 and the duty ratio Duty2 both of which are calculated in the second-previous switching cycle. The correction coefficient $\alpha$ and the offset correction value $\beta$ are calculated and updated for each switching cycle.

A calculation unit 62 calculates the correction parameter $\gamma$ by the above equation (eq7) based on the output voltage detection value VHmes in the current switching cycle, the input voltage detection value VLmes in the current switching cycle and the estimated inductance value Ls of the reactor 30 in the current switching cycle. **In** addition, the estimated inductance value Ls of the reactor 30 in the current switching cycle may be calculated based on, for example, inductance map information or formula information and the average electric current detection value Imes in the current switching cycle; the inductance map information or formula information associates the average electric current detection value with the estimated inductance value.

Moreover, the calculation unit 62 calculates the correction parameter $\gamma1$ by the above equation (eq8) based on the output voltage detection value VHmes1 in the immediately-previous switching cycle, the input voltage detection value VLmes1 in the immediately-previous switching cycle, and the estimated inductance value Ls1 of the reactor 30 in the immediately-previous switching cycle. **In** addition, the estimated inductance value Ls1 of the reactor 30 in the immediately-previous switching cycle may be calculated based on, for example, the aforementioned inductance map information or formula information and the average electric current detection value Imes1 in the immediately-previous switching cycle.

Furthermore, the calculation unit 62 calculates the duty ratio Duty in the current switching cycle by the above equation (eq9) based on the calculated $\gamma$ and $\gamma1$, the calculated correction coefficient $\alpha$ and offset correction value $\beta$, and

the command value Iref. The duty ratio Duty is a value that determines the percentage of the ON duration of the switch 31 in the next switching cycle.

An electric current control unit 63 calculates a drive command Sg for the switch 31 based on the calculated duty ratio Duty, and outputs the calculated drive command Sg to a drive circuit 52 (see FIG. 1). The drive command Sg is composed of an ON command and an OFF command for the switch 31. The drive circuit 52 performs switching control of the switch 31 based on the drive command Sg.

In addition, in the present embodiment, the drive circuit 52 and the electric current control unit 63 together correspond to a "switch control unit"; and the correction value calculation unit 61 and the calculation unit 62 together correspond to a "duty ratio calculation unit".

FIG. 7 illustrates steps of reactor current control performed by the control device 50.

In step S10, the command value Iref in the current switching cycle is acquired.

In step S11, the average electric current calculation unit 60 calculates the average electric current detection value Imes in the current switching cycle Ts based on a plurality of electric current detection values ILmes acquired in one switching cycle Ts. Moreover, the output voltage detection value VHmes and the input voltage detection value VLmes in the current switching cycle are acquired.

In step S12, it is determined whether the control mode in the next switching cycle is to be the discontinuous current mode or the continuous current mode. Specifically, the control mode in the next switching cycle may be determined, for example, to be the discontinuous current mode if the average electric current detection value Imes in the current switching cycle is determined to be less than or equal to a determination value, and to be the continuous current mode if the average electric current detection value Imes in the current switching cycle is determined to be greater than the determination value.

If the control mode in the next switching cycle is determined in step S12 to be the continuous current mode, the reactor current control proceeds to step S13. In step S13, the duty ratio Duty in the continuous current mode is calculated. For example, the duty ratio Duty in the continuous current mode may be calculated by the above equation (eq1) based on both the output voltage detection value VHmes and input voltage detection value VLmes in the current switching cycle.

In step S14, the drive command Sg is calculated based on the duty ratio Duty calculated in step S13, and is outputted to the drive circuit 52. Consequently, the switching control of the switch 31 is performed based on the duty ratio Duty calculated in step S13 so that the control mode becomes the continuous current mode.

In step S15, it is determined whether a drive stop command has been issued for the DC-to-DC converter 10. If it is determined that the drive stop command has not been issued, the reactor current control returns to step S10.

If the control mode in the next switching cycle is determined in step S12 to be the discontinuous current mode, the reactor current control proceeds to step S16. In step S16, the estimated inductance value Ls of the reactor 30 in the current switching cycle is calculated. Moreover, the correction parameters $\gamma$ and $\gamma1$ in the current switching cycle are also calculated.

In step S17, it is determined whether both a first condition and a second condition are satisfied.

The first condition is a condition such that the duty ratio Duty1 calculated in the immediately-previous switching cycle or the duty ratio Duty2 calculated in the second-previous switching cycle is not zero. That is, the first condition is a condition for avoiding a situation in which the denominator of the determinant on the right-hand side of the above equation (eq6) becomes zero and thus it becomes impossible to calculate the correction coefficient $\alpha$ and the offset correction value $\beta$.

The second condition is a condition such that the correction parameter $\gamma1$ in the immediately-previous switching cycle has a positive value. That is, the second condition is a condition for avoiding a situation in which the right-hand side of the above equation (eq9) takes the square root of a negative value and thus it becomes impossible to calculate the duty ratio Duty.

If it is determined in step S17 that both the first and second conditions are satisfied, the reactor current control proceeds to step S18. In step S18, the correction value calculation unit 61 calculates and updates the correction coefficient $\alpha$ and the offset correction value $\beta$.

In step S19, it is determined whether both a third condition and a fourth condition are satisfied.

The third condition is a condition such that the command value Iref acquired in step S10 is greater than the offset correction value $\beta$ calculated in step S18. The fourth condition is a condition such that the correction coefficient $\alpha$ calculated in step S18 is greater than zero. That is, the third and fourth conditions are conditions for avoiding a situation in which the right-hand side of the above equation (eq9) takes the square root of a negative value and thus it becomes impossible to calculate the duty ratio Duty.

If it is determined in step S19 that both the third and fourth conditions are satisfied, the reactor current control proceeds to step S20. In step S20, the calculation unit 62 calculates the duty ratio Duty in the discontinuous current mode. In subsequent step S21, the drive command Sg is calculated based on the duty ratio Duty calculated in step S20, and is outputted to the drive circuit 52. Consequently, the switching control of the switch 31 is performed based on the duty ratio Duty calculated in step S20 so that the control mode becomes the discontinuous current mode.

If it is determined in step S17 that at least one of the first and second conditions is not satisfied, the reactor current control proceeds to step S22. In step S22, it is determined whether the offset correction value $\beta1$ calculated in the immediately-previous switching cycle is greater than or equal to the command value Iref acquired in step S10.

If it is determined in step S22 that the command value Iref is greater than the offset correction value $\beta1$, or if it is determined in step S19 that at least one of the third and fourth conditions is not satisfied, the reactor current control proceeds to step S23. In step S23, the calculation unit 62 calculates the duty ratio Duty in the discontinuous current mode using the correction coefficient $\alpha1$ and offset correction value $\beta1$ calculated in the immediately-previous switching cycle. In subsequent step S21, the drive command Sg is calculated based on the duty ratio Duty calculated in step S23, and is outputted to the drive circuit 52. Consequently, the switching control of the switch 31 is performed based on the duty ratio Duty calculated in step S23 so that the control mode becomes the discontinuous current mode.

If it is determined in step S22 that the offset correction value $\beta1$ is greater than or equal to the command value Iref, the reactor current control proceeds to step S24. In step S24, the duty ratio Duty in the discontinuous current mode is set to zero. Thus, in subsequent step S21, the drive command Sg is maintained at the OFF command. Consequently, the switch 31 is kept off in the next switching cycle.

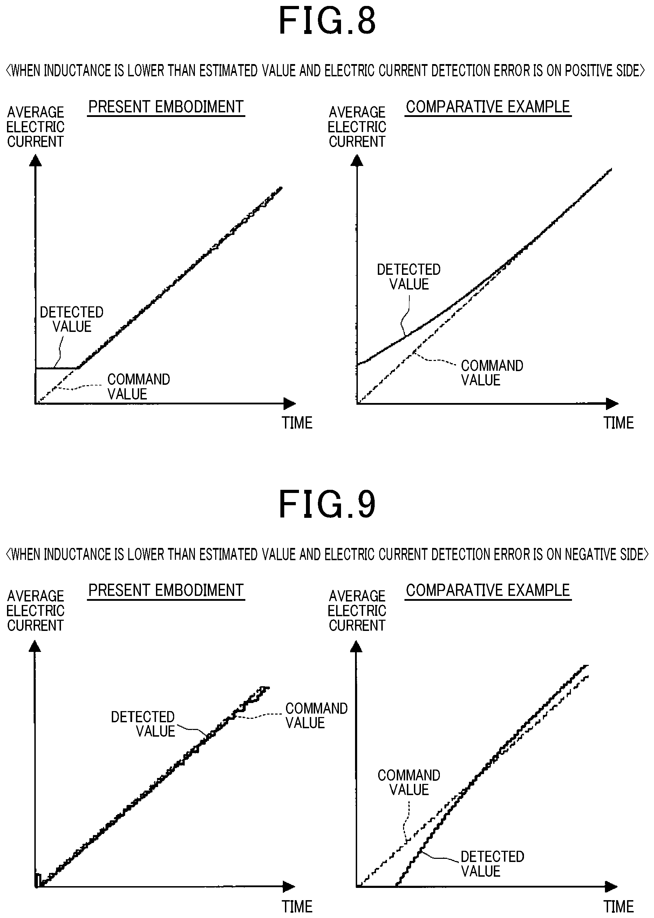

Next, advantageous effects of the present embodiment will be described, in comparison with comparative examples, using calculation results shown FIGS. 8 to 11. FIGS. 8 to 11 show the change with time of the average electric current detection value when the command value Iref is gradually increased at a constant rate. In addition, the comparative examples shown in FIGS. 8 to 11 are calculation results obtained in the discontinuous current mode using the method disclosed in Patent Document 1.

FIG. 8 shows the calculation results obtained when the actual inductance value of the reactor 30 is less than the estimated inductance value used in the control and the electric current detection values ILmes are greater than the actual value of the electric current flowing through the reactor 30.

As shown in FIG. 8, according to the present embodiment, the average electric current detection value Imes quickly follows the gradually-increasing command value Iref; thus, the error between the command value Iref and the average electric current detection value Imes becomes very small. In contrast, in the comparative example, the average electric current detection value Imes cannot quickly follow the command value Iref; thus, the error between the command value Iref and the average electric current detection value Imes becomes very large in an early stage of the electric current control. In addition, in the example according to the present embodiment shown in FIG. 8, the average electric current detection value Imes is kept at a constant value at the start of the electric current control; this is because the switch 31 is kept off when the electric current detection values ILmes including the offset error Ierr are greater than or equal to the command value Iref.

The calculation conditions for the calculation results shown in FIG. 9 differ from the calculation conditions for the calculation results shown in FIG. 8 in that the electric current detection values ILmes are less than the actual value of the electric current flowing through the reactor 30.

As shown in FIG. 9, according to the present embodiment, the average electric current detection value Imes quickly follows the gradually-increasing command value Iref; thus, the error between the command value Iref and the average electric current detection value Imes becomes very small. In contrast, in the comparative example, the average electric current detection value Imes cannot quickly follow the command value Iref; thus, the error between the command value Iref and the average electric current detection value Imes becomes very large.

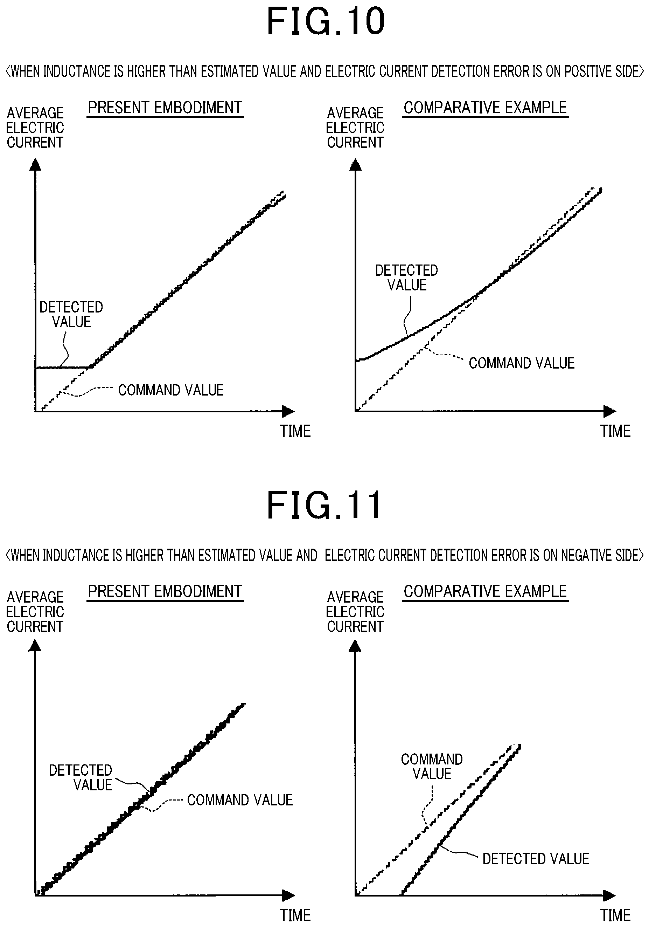

FIG. 10 shows the calculation results obtained when the actual inductance value of the reactor 30 is greater than the estimated inductance value used in the control and the electric current detection values ILmes are greater than the actual value of the electric current flowing through the reactor 30.

As shown in FIG. 10, according to the present embodiment, the average electric current detection value Imes quickly follows the gradually-increasing command value Iref; thus, the error between the command value Iref and the average electric current detection value Imes becomes very small. In contrast, in the comparative example, the average electric current detection value Imes cannot quickly follow the command value Iref; thus, the error between the command value Iref and the average electric current detection value Imes becomes very large.

The calculation conditions for the calculation results shown in FIG. 11 differ from the calculation conditions for the calculation results shown in FIG. 10 in that the electric current detection values ILmes are less than the actual value of the electric current flowing through the reactor 30.

As shown in FIG. 11, according to the present embodiment, the average electric current detection value Imes quickly follows the gradually-increasing command value Iref; thus, the error between the command value Iref and the average electric current detection value Imes becomes very small. In contrast, in the comparative example, the average electric current detection value Imes cannot quickly follow the command value Iref; thus, the error between the command value Iref and the average electric current detection value Imes becomes very large.

As described above, according to the present embodiment, it becomes possible to improve the calculation accuracy of the duty ratio Duty in the discontinuous current mode even when the electric current detection values ILmes include electric current detection errors. Consequently, it becomes possible to have the average electric current detection value Imes quickly following the command value Iref, thereby improving the electric current controllability in the discontinuous current mode.

[Second Embodiment]

Hereinafter, a second embodiment will be described with reference to the drawings, focusing on the differences thereof from the first embodiment. In the present embodiment, the method of determining whether the control mode in the next switching cycle is to be the discontinuous current mode or the continuous current mode is changed.

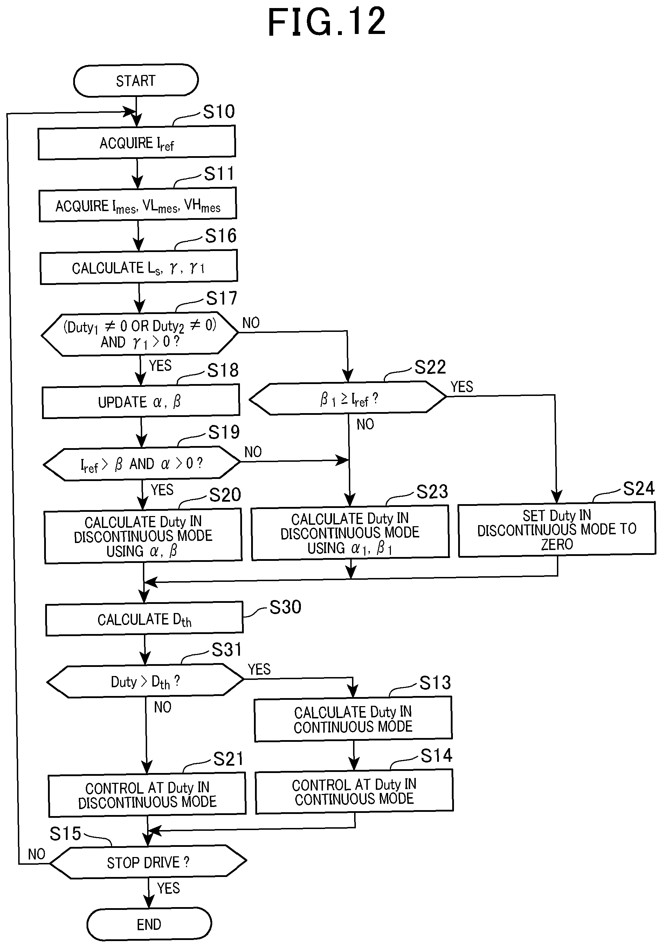

FIG. 12 illustrates steps of reactor current control performed by the control device 50 according to the present embodiment. It should be noted that for the sake of convenience, in FIG. 12, the same steps as those shown in FIG. 7 are designated by the same reference signs.

In the present embodiment, after completion of step S11, the reactor current control proceeds to step S16.

Moreover, in the present embodiment, after completion of step S20, step S23 or step S24, the reactor current control proceeds to step S30. In step S30, a duty threshold Dth is calculated. The duty threshold Dth is a threshold for determining whether the control mode is to be the discontinuous current mode or the continuous current mode. The duty threshold Dth may be calculated as, for example, the upper limit of the duty ratio Duty that can be taken in the discontinuous current mode.

In subsequent step S31, it is determined whether the duty ratio Duty calculated in step S20, step S23 or step S24 is higher than the duty threshold Dth. If it is determined in step S31 that the duty ratio Duty is lower than or equal to the duty threshold Dth, the control mode in the next switching cycle is determined to be the discontinuous current mode; then, the reactor current control proceeds to step S21. In contrast, if it is determined in step S31 that the duty ratio Duty is higher than the duty threshold Dth, the control mode in the next switching cycle is determined to be the continuous current mode; then, the reactor current control proceeds to step S13. That is, in the present embodiment, the duty ratio in the discontinuous current mode is used to determine whether to switch the control mode from the discontinuous current mode to the continuous current mode.

[Third Embodiment]

Hereinafter, a third embodiment will be described with reference to the drawings, focusing on the differences thereof from the first embodiment. In the present embodiment, in the discontinuous current mode, when the duty ratio Duty calculated in the current switching cycle changes significantly with respect to the duty ratio Duty1 calculated in the immediately-previous switching cycle, a process for suppressing the change is performed.

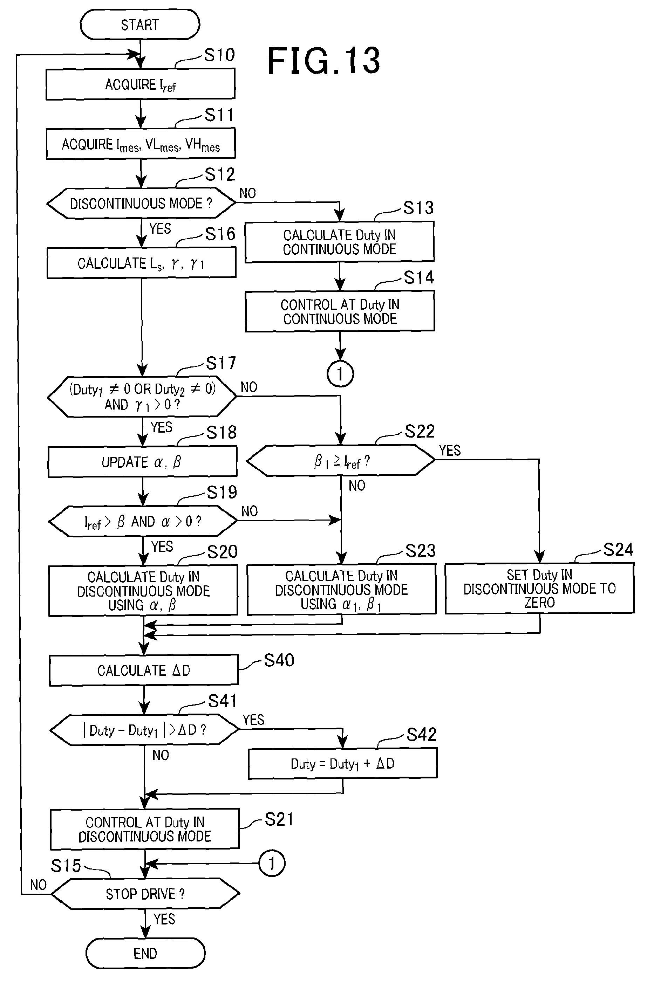

FIG. 13 illustrates steps of reactor current control performed by the control device 50 according to the present embodiment. It should be noted that for the sake of convenience, in FIG. 13, the same steps as those shown in FIG. 7 are designated by the same reference signs.

In the present embodiment, after completion of step S20, step S23 or step S24, the reactor current control proceeds to step S40. In step S40, a variation allowance $\Delta D$ is calculated. The variation allowance $\Delta D$ is determined based on the amount of change in the duty ratio determined by the above equation (eq2) from the immediately-previous switching cycle. Specifically, the variation allowance $\Delta D$ may be calculated by, for example, the following equation (eq10). The coefficient Kc (>0) in the following equation (eq10) may be set to, for example, a value between 3 and 5. In addition, on the right-hand side of the following equation (eq10), Iref1 is the command value Iref in the immediately-previous switching cycle.

$$\Delta D = K_c \cdot \left\{ \sqrt{2L_s \cdot f_{sw} \cdot \frac{VH_{mes} - VL_{mes}}{VH_{mes} \cdot VL_{mes}} \cdot I_{ref}} \right.$$

$$\left. - \sqrt{2L_{s1} \cdot f_{sw} \cdot \frac{VH_{mes1} - VL_{mes1}}{VH_{mes1} \cdot VL_{mes1}} \cdot I_{ref1}} \right\} \quad \cdot \cdot \cdot (eq10)$$

In subsequent step S41, it is determined whether the absolute value of the difference between the duty ratio Duty calculated in the current switching cycle and the duty ratio Duty1 calculated in the immediately-previous switching cycle is greater than the variation allowance $\Delta D$.

If the result of the determination in step S41 is negative, the reactor current control proceeds to step S21. In contrast, if the result of the determination in step S41 is affirmative, the reactor current control proceeds to step S42. In step S42, the duty ratio Duty calculated in the current switching cycle is rewritten to the sum of the duty ratio Duty1 calculated in the immediately-previous switching cycle and the variation allowance $\Delta D$. Then, the reactor current control proceeds to step S21.

According to the present embodiment described above, it becomes possible to suppress the negative influence of, for example, noise on the calculation accuracy of the duty ratio Duty in the discontinuous current mode.

[Other Embodiments]

The above-described embodiments may be modified and implemented as follows.

The correction coefficient $\gamma/\gamma 1$ may not be used in the above equation (eq9). In this case, the control device may calculate the duty ratio Duty by the following equation (eq11).

$$\text{Duty} = \sqrt{\frac{I_{ref} - \beta}{\alpha}} \quad \cdot \cdot \cdot (eq11)$$

In the configuration shown in FIG. 1, instead of the storage battery 21, an electrical load may be connected to the output terminals THo and TLo. In this case, the DC-to-DC converter may be a voltage-controlled DC-to-DC converter instead of a current-controlled DC-to-DC converter; in the voltage-controlled DC-to-DC converter, electric current minor loop control is added to the electric current control of the control device.

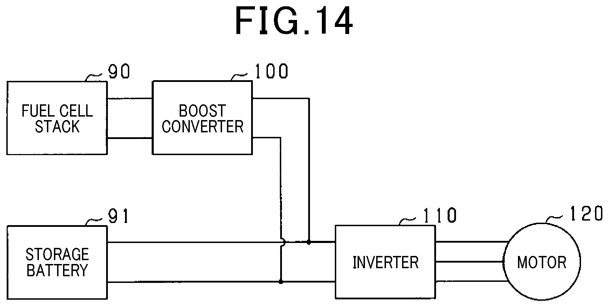

The control system according to the present disclosure is not limited to the configuration shown in FIG. 1, but may alternatively have, for example, a configuration as shown in FIG. 14. FIG. 14 shows the configuration of a motor drive system for an electric vehicle equipped with a fuel cell stack 90. The motor drive system includes a boost converter 100, a storage battery 91, an inverter 110 and a motor 120. The boost converter 100 steps up the output voltage of the fuel cell stack 90 and supplies the stepped-up voltage to the inverter 110. The inverter 110 converts DC power supplied from at least one of the boost converter 100 and the storage battery 91 into AC power, and supplies the AC power to an armature coil of the motor 120. In the motor drive system, a control device according to the present disclosure may be applied to electric current control of the boost converter 100.

The duty ratio and the average electric current detection value used in the calculation process based on the above equation (eq6) are the values in the immediately-previous switching cycle and the values in the second-previous switching cycle, but are not limited to these values. For example, values in two past switching cycles selected from the switching cycles from that switching cycle which comes ten cycles before the current switching cycle to the immediately-previous switching cycle may be used in the calculation process based on the above equation (eq6). More specifically, the values in the immediately-previous switching cycle and the values in that switching cycle which comes three cycles before the current switching cycle may be used. Alternatively, the values in the second-previous switching cycle and the values in that switching cycle which comes five cycles before the current switching cycle may be used. However, it is desirable to select the two past switching cycles so that the interval between the two past switching cycles is an interval such that the relationship between the average electric current and the duty ratio in the first past switching cycle is not significantly different from the relationship between the average electric current and the duty ratio in the second past switching cycle.

DC-to-DC converters to which control devices according to the present disclosure can be applied are not limited to boost converters, but may alternatively be buck converters that step down an input voltage and output the stepped-down voltage, or be buck-boost converters that have both a voltage stepping-up function and a voltage stepping-down function. Moreover, for buck converters and buck-boost converters, it is also possible to determine coefficient information (specifically, a correction coefficient) of an independent variable and intercept information (specifically, an offset correction value) in an equation in which the duty ratio is the independent variable and the average electric current is the dependent variable, as the above equation (eq4) corresponding to boost converters. Accordingly, for buck converters and buck-boost converters, it is also possible to calculate the coefficient information and the intercept information based on the duty ratio and the average electric current detection value in two past switching cycles.

Moreover, DC-to-DC converters to which control devices according to the present disclosure can be applied are not limited to non-insulated DC-to-DC converters, but may alternatively be isolated DC-to-DC converters which include a transformer. The transformer has both a primary-side (i.e., input-side) reactor and a secondary-side (i.e., output-side) reactor. Further, the isolated DC-to-DC converters may be, for example, flyback converters, forward converters, push-pull converters or full-bridge converters, and include a switch on the primary side.

For example, in the case of a forward converter, a reactor (hereinafter, to be referred to as the specific reactor) different from the secondary-side reactor of the transformer is further provided on the secondary side. In the forward converter, during an ON duration of the switch on the primary side, electric current flowing through the specific reactor on the secondary side gradually increases and magnetic energy is accumulated in the specific reactor. In contrast, in an OFF duration of the switch on the primary side, the accumulated magnetic energy is released and the electric current flowing through the specific reactor gradually decreases to zero. Consequently, in one switching cycle, the electric current flowing through the specific reactor, which changes with time, first has a triangular waveform and is then kept at zero.

Moreover, for example, in the case of a flyback converter, during an ON duration of the switch on the primary side, electric current flowing through the primary-side reactor of the transformer gradually increases and magnetic energy is accumulated in the primary-side reactor and a core of the transformer. In contrast, in an OFF duration of the switch on the primary side, the accumulated magnetic energy is released and the electric current flowing through the primary-side reactor decreases to zero. Consequently, in one switching cycle, the electric current flowing through the primary-side reactor, which changes with time, first has a triangular waveform and is then kept at zero.

The control unit and the control method described in the present disclosure may be realized by a dedicated computer that includes a processor, which is programmed to perform one or more functions embodied by a computer program, and a memory. As an alternative, the control unit and the control method described in the present disclosure may be realized by a dedicated computer that includes a processor configured with one or more dedicated hardware logic circuits. As another alternative, the control unit and the control method described in the present disclosure may be realized by one or more dedicated computers configured with a combination of a processor programmed to perform one or more functions, a memory and a processor configured with one or more dedicated hardware logic circuits. In addition, the computer program may be stored as computer-executable instructions in a computer-readable non-transitory tangible recording medium.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

**Claims**

1. A control device (50) for a DC-to-DC converter (10, 100),

   the DC-to-DC converter comprising a switch (31) and a reactor (30) and being configured to transform an input voltage, by repeating accumulation of magnetic energy in the reactor and release of the magnetic energy from the reactor through switching control of the switch, and output the transformed voltage, the control device comprising:

   an electric current calculation unit (60) configured to calculate, based on electric current detection values of an electric current detection unit (42) that detects electric current flowing through the reactor, an average electric current that is a time average value of the electric current flowing through the reactor in one switching cycle;
   a duty ratio calculation unit (61, 62) configurated to calculate, based on a command value of the average electric current, a duty ratio in a discontinuous current mode; and
   a switch control unit (52, 63) configured to perform, based on the calculated duty ratio, the switching control of the switch,
   wherein

   the duty ratio calculation unit is configured to:

   calculate, based on the duty ratio and the average electric current calculated in a plurality of past switching cycles, relationship information ($\alpha$, $\beta$) between the average electric current and the duty ratio; and
   calculate, based on the calculated relationship information and the command value, the duty ratio in a next switching cycle.

2.

   The control device as set forth in Claim 1, wherein
   the duty ratio calculation unit is configured to calculate the relationship information based on the duty ratio and the average electric current calculated in a first cycle, which is a past switching cycle, and the duty ratio and the average electric current calculated in a second cycle that is a past switching cycle preceding the first cycle, and the relationship information is constituted of coefficient information ($\alpha$) of an independent variable in an equation, in which the duty ratio is the independent variable and the average electric current is a dependent variable, and intercept information ($\beta$) in the equation.

**3.**

The control device as set forth in Claim 2, wherein
the duty ratio calculation unit is further configured to:

acquire an input voltage detection value and an output voltage detection value from a voltage detection unit that detects the input voltage and an output voltage of the DC-to-DC converter;
calculate an estimated inductance value of the reactor based on the electric current detection values; and
correct the duty ratio in the next switching cycle based on the input voltage detection value, the output voltage detection value and the estimated inductance value in a current switching cycle and the input voltage detection value, the output voltage detection value and the estimated inductance value in the first cycle.

**4.** A program applicable to a DC-to-DC converter (10, 100), which comprises a switch (31), a reactor (30) and a computer (51), to cause the DC-to-DC converter to transform an input voltage, by repeating accumulation of magnetic energy in the reactor and release of the magnetic energy from the reactor through switching control of the switch, and output the transformed voltage,

the program being configured to cause the computer to execute:

a process of calculating, based on electric current detection values of an electric current detection unit (42) that detects electric current flowing through the reactor, an average electric current that is a time average value of the electric current flowing through the reactor in one switching cycle;
a duty ratio calculation process of calculating, based on a command value of the average electric current, a duty ratio in a discontinuous current mode; and
a process of performing, based on the calculated duty ratio, the switching control of the switch, wherein

the duty ratio calculation process is a process of:

calculating, based on the duty ratio and the average electric current calculated in a plurality of past switching cycles, relationship information $(\alpha, \beta)$ between the average electric current and the duty ratio; and
calculating, based on the calculated relationship information and the command value, the duty ratio in a next switching cycle.

# FIG.1

# FIG.2

DISCONTINUOUS MODE

t1(SWITCH ON)

$T_S$

$Duty \cdot T_S$

PWM SIGNAL

REACTOR CURRENT

0

TIME

# FIG.3

CRITICAL MODE

t1(SWITCH ON)

$T_S$

$Duty \cdot T_S$

PWM SIGNAL

REACTOR CURRENT

0

TIME

# FIG.4

CONTINUOUS MODE

t1(SWITCH ON)

$T_S$

$Duty \cdot T_S$

PWM SIGNAL

REACTOR CURRENT

0

TIME

# FIG.5

AVERAGE ELECTRIC CURRENT

DETECTED VALUE

COMMAND VALUE

$I_{ref\_b}$

$I_{ref\_a}$

$Ierr$

$Duty_a$

$Duty_b$

Duty

AVERAGE ELECTRIC CURRENT

DETECTED VALUE

COMMAND VALUE

$I_{mes\_b}$

$I_{mes\_a}$

$Ierr$

$t_a$

$t_b$

TIME

# FIG.6

$I_{mes}$  →  AVERAGE ELECTRIC CURRENT CALCULATION UNIT  ←  $IL_{mes}$

~60

~61

$Z^{-1}$ → $I_{mes1}$

$Z^{-2}$ → $I_{mes2}$

$$\alpha = \frac{I_{mes1} - I_{mes2}}{Duty_1^2 - Duty_2^2}$$

$Z^{-1}$ → $Duty_1$

$Z^{-2}$ → $Duty_2$

$$\beta = \frac{-I_{mes1} \cdot Duty_2^2 + I_{mes2} \cdot Duty_1^2}{Duty_1^2 - Duty_2^2}$$

$\alpha, \beta$

$Duty$

~62

$I_{ref}$

$L_S$

$Z^{-1}$ → $L_{S1}$

$VH_{mes}$
$VL_{mes}$

$Z^{-1}$ → $VH_{mes1}$
$VL_{mes1}$

$$Duty = \sqrt{\frac{VH_{mes} \cdot VL_{mes}}{L_S(VH_{mes} - VL_{mes})} \cdot \frac{L_{S1}(VH_{mes1} - VL_{mes1})}{VH_{mes1} \cdot VL_{mes1}}} \sqrt{(I_{ref} - \beta)/\alpha}$$

~63

ELECTRIC CURRENT CONTROL UNIT  →  $Sg$

EP 4 633 023 A1

# FIG.7

```
                    START
                      │
         ┌────────────┤ S10
         │    ┌────────▼────────┐
         │    │  ACQUIRE I_ref  │
         │    └────────┬────────┘
         │             │ S11
         │    ┌────────▼──────────────────┐
         │    │ ACQUIRE I_mes, VL_mes, VH_mes│
         │    └────────┬───────────────────┘
         │             │ S12            NO
         │    ◇ DISCONTINUOUS MODE ? ────────────┐
         │             │ YES                     │ S13
         │             │ S16            ┌─────────▼──────────┐
         │    ┌────────▼────────┐      │ CALCULATE Duty IN  │
         │    │ CALCULATE L_s, γ, γ1│  │  CONTINUOUS MODE   │
         │    └────────┬────────┘      └─────────┬──────────┘
         │             │                         │ S14
         │             │                ┌─────────▼──────────┐
         │             │                │ CONTROL AT Duty IN │
         │             │                │  CONTINUOUS MODE   │
         │             │                └─────────┬──────────┘
         │             │                          │
         │             │                         (1)
         │             │ S17
         │    ◇ (Duty1 ≠ 0 OR Duty2 ≠ 0) ─ NO ─┐
         │      AND γ1 > 0 ?                    │
         │             │ YES                    │
         │             │ S18        S22         │
         │    ┌────────▼────────┐  ◇ β1 ≥ I_ref ? ── YES ──┐
         │    │  UPDATE α, β    │         │ NO             │
         │    └────────┬────────┘         │                │
         │             │ S19              │                │
         │    ◇ I_ref > β AND α > 0 ? ─ NO ─┐              │
         │             │ YES               │ │             │
         │             │ S20          S23  │ │       S24   │
  ┌──────▼──────┐ ┌────────────┐ ┌──────────────┐ ┌──────────────┐
  │CALCULATE Duty IN│ │CALCULATE Duty IN│ │ SET Duty IN  │
  │DISCONTINUOUS MODE│ │DISCONTINUOUS MODE│ │DISCONTINUOUS MODE TO│
  │  USING α, β  │ │  USING α1, β1│ │    ZERO      │
  └──────┬──────┘ └──────┬──────┘ └──────┬──────┘
         │               │               │
         └───────────────┴───────────────┘
                      │
         ┌────────────▼────────────┐ S21
         │  CONTROL AT Duty IN     │
         │  DISCONTINUOUS MODE     │
         └────────────┬────────────┘
                      │◄──────(1)
       S15            │
    NO ◇ STOP DRIVE ?
                      │ YES
                   ┌──▼──┐
                   │ END │
                   └─────┘
```

# FIG.8

⟨WHEN INDUCTANCE IS LOWER THAN ESTIMATED VALUE AND ELECTRIC CURRENT DETECTION ERROR IS ON POSITIVE SIDE⟩

# FIG.9

⟨WHEN INDUCTANCE IS LOWER THAN ESTIMATED VALUE AND ELECTRIC CURRENT DETECTION ERROR IS ON NEGATIVE SIDE⟩

# FIG.10

⟨WHEN INDUCTANCE IS HIGHER THAN ESTIMATED VALUE AND ELECTRIC CURRENT DETECTION ERROR IS ON POSITIVE SIDE⟩

PRESENT EMBODIMENT

AVERAGE
ELECTRIC
CURRENT

DETECTED
VALUE

COMMAND VALUE

TIME

COMPARATIVE EXAMPLE

AVERAGE
ELECTRIC
CURRENT

DETECTED
VALUE

COMMAND VALUE

TIME

# FIG.11

⟨WHEN INDUCTANCE IS HIGHER THAN ESTIMATED VALUE AND ELECTRIC CURRENT DETECTION ERROR IS ON NEGATIVE SIDE⟩

PRESENT EMBODIMENT

AVERAGE
ELECTRIC
CURRENT

DETECTED
VALUE

COMMAND VALUE

TIME

COMPARATIVE EXAMPLE

AVERAGE
ELECTRIC
CURRENT

COMMAND
VALUE

DETECTED VALUE

TIME

# FIG.12

START

ACQUIRE $I_{ref}$ — S10

ACQUIRE $I_{mes}$, $VL_{mes}$, $VH_{mes}$ — S11

CALCULATE $L_s$, $\gamma$, $\gamma_1$ — S16

(Duty$_1 \neq 0$ OR Duty$_2 \neq 0$) AND $\gamma_1 > 0$? — S17

→ NO

YES

UPDATE $\alpha$, $\beta$ — S18

$\beta_1 \geq I_{ref}$? — S22 → YES

NO

$I_{ref} > \beta$ AND $\alpha > 0$? — S19 → NO

YES

CALCULATE Duty IN DISCONTINUOUS MODE USING $\alpha$, $\beta$ — S20

CALCULATE Duty IN DISCONTINUOUS MODE USING $\alpha_1$, $\beta_1$ — S23

SET Duty IN DISCONTINUOUS MODE TO ZERO — S24

CALCULATE $D_{th}$ — S30

Duty > $D_{th}$? — S31 → YES

NO

CALCULATE Duty IN CONTINUOUS MODE — S13

CONTROL AT Duty IN DISCONTINUOUS MODE — S21

CONTROL AT Duty IN CONTINUOUS MODE — S14

S15 — STOP DRIVE?

NO

YES

END

# FIG.13

START

ACQUIRE $I_{ref}$ — S10

ACQUIRE $I_{mes}$, $VL_{mes}$, $VH_{mes}$ — S11

DISCONTINUOUS MODE ? — S12

NO → S13 CALCULATE Duty IN CONTINUOUS MODE

S14 CONTROL AT Duty IN CONTINUOUS MODE

YES — S16 CALCULATE $L_s$, $\gamma$, $\gamma_1$

(1)

$(Duty_1 \neq 0$ OR $Duty_2 \neq 0)$ AND $\gamma_1 > 0$ ? — S17

NO

YES — S18 UPDATE $\alpha$, $\beta$

$\beta_1 \geq I_{ref}$ ? — S22

YES

$I_{ref} > \beta$ AND $\alpha > 0$ ? — S19

NO

YES — S20 CALCULATE Duty IN DISCONTINUOUS MODE USING $\alpha$, $\beta$

S23 CALCULATE Duty IN DISCONTINUOUS MODE USING $\alpha_1$, $\beta_1$

S24 SET Duty IN DISCONTINUOUS MODE TO ZERO

CALCULATE $\Delta D$ — S40

$|$ Duty $-$ Duty$_1$ $| > \Delta D$ ? — S41

YES → S42 Duty $=$ Duty$_1$ $+$ $\Delta D$

NO

CONTROL AT Duty IN DISCONTINUOUS MODE — S21

(1)

S15 — STOP DRIVE ?

NO

YES

END

# FIG.14

```
┌──────────┐ ~90      ┌──────────┐ ~100
│FUEL CELL │──────────│  BOOST   │
│  STACK   │          │CONVERTER │
└──────────┘          └──────────┘

┌──────────┐ ~91                    ┌──────────┐ ~110      ~120
│ STORAGE  │                        │          │         ┌────────┐
│ BATTERY  │────────────────────────│ INVERTER │─────────│ MOTOR  │
└──────────┘                        └──────────┘         └────────┘
```

# INTERNATIONAL SEARCH REPORT

| International application No. |
|---|
| **PCT/JP2023/040372** |

| A. | CLASSIFICATION OF SUBJECT MATTER |
|---|---|

*H02M 3/155*(2006.01)i
FI:   H02M3/155 P; H02M3/155 K

According to International Patent Classification (IPC) or to both national classification and IPC

| B. | FIELDS SEARCHED |
|---|---|

Minimum documentation searched (classification system followed by classification symbols)

H02M3/155

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2022-36647 A (TOYOTA MOTOR CORP) 08 March 2022 (2022-03-08)<br>entire text, all drawings | 1-4 |
| A | JP 2019-208316 A (SOKEN INC) 05 December 2019 (2019-12-05)<br>entire text, all drawings | 1-4 |
| A | WO 2013/098999 A1 (TOYOTA MOTOR CORP) 04 July 2013 (2013-07-04)<br>entire text, all drawings | 1-4 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 January 2024** | **30 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2023/040372**

| Patent document cited in search report | | | Publication date (day/month/year) | Patent family member(s) | | | Publication date (day/month/year) |
|---|---|---|---|---|---|---|---|
| JP | 2022-36647 | A | 08 March 2022 | US | 2022/0060107 | A1 | |
| | | | | entire text, all drawings | | | |
| | | | | DE | 102021116882 | A1 | |
| | | | | CN | 114094822 | A | |
| JP | 2019-208316 | A | 05 December 2019 | US | 2021/0083594 | A1 | |
| | | | | entire text, all drawings | | | |
| | | | | WO | 2019/230422 | A1 | |
| | | | | CN | 112166549 | A | |
| WO | 2013/098999 | A1 | 04 July 2013 | US | 2013/0176759 | A1 | |
| | | | | entire text, all drawings | | | |
| | | | | CN | 103430438 | A | |

Form PCT/ISA/210 (patent family annex) (July 2022)

**EP 4 633 023 A1**

**Patent documents cited in the description**

- JP 2022195216 A
- JP 2015019448 A